# EUROPEAN PATENT APPLICATION

(11) **EP 3 000 348 A1**
(43) Date of publication of application: **30.03.2016**
(21) Application number: 15185925.3
(22) Date of filing: 18.09.2015
(51) Int. Cl.: A45C 11/00, D06M 11/00, D06M 16/00, B65D 65/42, G06F 1/18

(54) **PROTECTIVE WRAPPER AND ASSEMBLY, USE AND MANUFACTURING METHODS**

(30) Priority: 23.09.2014 IT BS20140175
(71) Applicant: Leonardo S.r.l., 25030 Maclodio, BRESCIA (IT)
(72) Inventor: TERENZI, Alessandro, I-25030 Maclodio, BRESCIA (IT)
(74) Representative: Eterno, Enrico

(57) **Abstract**

Method for making a bacteriostatic or antibacterial protective wrapper, comprising the steps of knitting a tubular wall with at least one polyamide yarn, wherein the colour, the average thickness of said yarn and/or the knit density are selected so as to allow an least partial transparency through said wall; impregnating the tubular wall with a solution comprising at least one active substance to grant said wall a bacteriostatic or antibacterial function, and removing at least part of the solution; and closing or welding a first axial end of the tubular wall, leaving at the opposite axial end an access opening to an inner compartment, thereby obtaining the protective wrapper.

The invention also relates to a protective wrapper and an assembly comprising such wrapper.

## Description

The present invention relates to a protective wrapper, a method of manufacturing such a wrapper and a method of use of the latter.

It is well known that objects accessible to many users are especially subject to bacteriological contamination, precisely because of the constant handling of these articles by different people.

Merely by way of example, reference may be made to the remote controls of hotel, hospital rooms, etc. - for example, used to control the television or air conditioning of a room.

It would be desirable for the contact surfaces of the aforesaid objects to be continuously cleaned and/or sterilised but, of course, this possibility is hard to put into practice.

In addition, the objects in question are not always suitable to be covered, in that such operation might jeopardise the functioning or the visibility of the relative functions thereof.

The present invention is set in the above context, proposing to provide a protective wrapper with antibacterial or bacteriostatic characteristics, which can be produced at low cost, suitable to wrap objects of various kinds so as to restrict the passage of bacteria from a user of an object or article to a subsequent user.

Such objective is achieved by a method for making a bacteriostatic or antibacterial protective wrapper, comprising the steps of:

- through a circular knitting machine (preferably a single-cylinder circular machine), knitting a tubular wall with at least one polyamide yarn;

- impregnating the tubular wall with a solution comprising at least one active substance to grant said wall a bacteriostatic or antibacterial function, and removing at least part of the solution;

- closing or (heat-)welding a first axial end of the tubular wall, leaving at the opposite axial end an access opening to an inner compartment of said wall, thereby obtaining the protective wrapper.

The protective wrapper of the present invention thus has an inner compartment laterally delimited by the tubular wall, closed at one axial end by the closure or by (heat-)welding, and accessible at the opposite axial end through the access opening.

According to an advantageous variant, the active ingredient comprises silver ions.

As discussed, following the impregnation step, said wall is coated with the active ingredient which limits, prevents or reduces the proliferation of bacteria on the wrapper and of course on the relative content.

According to a particularly advantageous embodiment, the colour, the average thickness of the polyamide yarn and/or the knitting density of the wrapper fabric are selected so as to allow at least partial transparency through the tubular wall, and thus a partial visibility of the object, the device or the article contained in the inner compartment.

Preferably, the tubular wall consists exclusively of a polyamide fabric, in particular of a nylon fabric.

Optionally, the method may also comprise a step of fitting an edge of the tubular wall defining the access opening with a seal or with a clip, for example disposable, with a drawstring or with an elastic band to close or restrict said opening.

This way, once an article has been inserted in the inner compartment, the possibility of its accidental or unwanted extraction is extremely limited.

According to a preferred variant, the impregnation step comprises the sub-steps of:

i) washing the tubular wall with an aqueous washing solution having a temperature equal to or higher than 60°C, with a pH value equal to or greater than 3 to remove oily or fatty substances;

ii) optionally colouring the tubular wall of sub-step i) with a pigment or a dye;

iii) washing the tubular wall of sub-step i) or of sub-step ii) with the aqueous solution comprising the active substance or plurality thereof, preferably comprising silver ions (for example in the form of silver chloride ions).

Preferably, the sub-step iii) may be conducted at a temperature equal to or higher than 30°C, for example at about 40-50°C.

According to a particularly preferred variant, the solution comprising the silver ions could comprise a solution of silver chloride, titanium dioxide, sodium salt of butanedioic acid, sulpho-, 1,4-bis (2-ethylhexyl) ester.

Merely by way of example, a product suitable for this purpose is manufactured under the trade name "Sanitized T 27-22 Silver" by the company Clariant.

The present invention further relates to a protective wrapper made using the method according to any of the variants discussed above.

Preferably, the protective wrapper is a disposable wrapper.

According to one variant, the protective wrapper is reusable, for example following a regeneration phase. For instance, said regeneration could be performed by means of sterilization and a new phase of impregnating with the solution comprising the active ingredient.

According to further embodiments, the manufacturing method could comprise at least one water-repellent treatment, at least one oil-repellent treatment, at least one anti-mite treatment, at least one anti-lice treatment or combinations thereof.

The present invention further relates to a method of using the aforementioned protective wrapper, which comprises the steps of:
- providing an electrical or electronic device selected from the group consisting of a remote control, a tablet or a smartphone, a POS (point of sale) terminal, a keyboard, a touch screen device or the like;
- inserting the electrical/electronic device in the inner compartment through the access opening;
- closing or restricting said opening by means of a seal or a clip, for example, disposable, a drawstring or an elastic band joined to an edge of the aforesaid opening.

For example, the seal or the clip may have a snap closure.

According to one variant, the seal or the clip may be of the metal type (for example aluminium or steel) or plastic.

Within the present description, the term "disposable seal" or "disposable clip" is understood to mean seals or clips with irreversible closures, which can thus be opened again only by damaging said seal and/or clip.

According to one embodiment, a seal or clip may comprise a body folding back on itself in a book-like manner, having on the one side a hooked stem and on the other side a cavity inside which the hooked stem part is suitable to barely penetrate. After the hooked part of the stem has barely penetrated the cavity, the body thus remains bent back on itself.

This way, according to the above variant, the access opening of the tubular body may be retained in at least partial closure, by virtue of the seal or of the clip holding the edge of the tubular wall.

Although the variant with the electrical/ electronic device is preferred, further embodiments may provide for the use of the wrapper described to cover handles, saddles or handlebar grips (for example of motor cycles), headrests or armrests (for example of public or private transport).

Moreover, according to yet a further variant, the method of use could be modified in that the step of closing or narrowing could be replaced by a step of (heat-)welding the access opening to prevent the exit of the device, or disengagement of the handle, saddle, handlebar grip, headrest or armrest.

For example, the (heat-)welding may be performed in a continuous manner along the edge, or at discrete points.

The present invention lastly relates to a protective assembly comprising:
- a bacteriostatic or antibacterial protective casing, comprising a knitted tubular wall made with at least one polyamide yarn and defining an inner compartment;
- at least one active substance to grant said wall a bacteriostatic or antibacterial function, or impregnating said wall;
- an electrical or electronic device inserted in the inner compartment and selected from the group consisting of a remote control, a tablet or a smartphone, a POS (point of sale) terminal, a keyboard, a touch screen device or the like;
wherein a (heat-)welding closes a first axial end of the tubular wall, and wherein a seal or a clip, a drawstring or an elastic band closes or restricts the opposite axial end of said wall.

With regard to the preferred or advantageous features of such assembly, and in particular of the tubular wall and of the active ingredient, reference is made to the above description.

Merely by way of example, a preferred embodiment of such assembly provides that the colour, the average thickness of said yarn and/or the knit density are selected so as to allow at least partial transparency through the tubular wall.

Innovatively, the wrapper and the assembly of the present invention are suitable to achieve the objectives specified earlier.

More precisely, the covering of the objects described with the wrapper makes it possible to maintain satisfactory hygiene conditions at a low cost and in an extremely practical manner.

Advantageously, the protective wrapper gives a clear view of the inner compartment. Therefore even devices with buttons (such as remote controls or touch screens) contained therein can be handled without any difficulty.

Advantageously, the presence of metal ions in the tubular wall actually favours the transmission of electrical impulses through said wall, reason for which capacitive devices are totally unaffected by the presence of the protective wrapper, even showing improved performance.

Advantageously, the protective wrapper and assembly of the present invention are constructively simple and are quick to assemble, since consisting of a small number of components.

Advantageously, the gripping of objects through the wrapper described is extremely firm, since the described expedients make it possible to reduce the risk of such objects escaping from the inner compartment.

Advantageously, by virtue of the expedients described, the protective wrapper has an intrinsic elasticity which makes it adaptable to the object, device or article, and which advantageously permits a satisfactory surface adhesion with the object/device/item.

This latter feature contributes to good visibility through the tubular wall.

A person skilled in the art may make variations or replacements of elements with others functionally equivalent to the aforementioned embodiments of the wrapper, assembly and methods so as to satisfy specific requirements.

Such variants are also contained within the scope of protection as defined by the following claims.

In addition, each variant described as belonging to a possible embodiment may be realised independently of the other embodiments described.

## Claims

1. Method for making a bacteriostatic or antibacterial protective wrapper, comprising steps of:
- through a circular knitting machine, for example a single-cylinder machine, knitting a tubular wall with at least one polyamide yarn, wherein the colour, the average thickness of said yarn and/or the knit density are selected so as to allow an least partial transparency through said wall;
- impregnating the tubular wall with a solution comprising at least one active substance to grant said wall a bacteriostatic or antibacterial function, and removing at least part of said solution;
- closing or (heat-)welding a first axial end of the tubular wall, leaving at the opposite axial end an access opening to an inner compartment of said wall, thereby obtaining the protective wrapper.

2. Method according to claim 1, wherein the active substance comprises silver ions.

3. Method according to claim 1 or 2, wherein the protective wrapper is disposable.

4. Method according to any of the previous claims, wherein the tubular wall consists exclusively of a polyamide fabric, in particular of a nylon fabric.

5. Method according to any of the previous claims, wherein the impregnating step comprises the sub-steps of:
i) washing the tubular wall with an aqueous washing solution having a temperature equal to or higher than 60°C, with a pH value equal to or greater than 3 to remove oily or fatty substances;
ii) optionally colouring the tubular wall of sub-step i) with a pigment or a dye;
iii) washing the tubular wall of sub-step i) or of sub-step ii) with the aqueous solution comprising the active substance or plurality thereof, optionally the silver ions.

6. Method according to any of the previous claims, wherein the solution is a solution of silver chloride, titanium dioxide, sodium salt of butanedioic acid, sulpho-, 1,4-bis(2-ethylhexyl) ester.

7. Method according to any of the previous claims, comprising a step of fitting an edge of the tubular wall defining the access opening with a seal or with a clip, for example disposable, with a drawstring or with an elastic band to close or restrict said opening.

8. Protective wrapper made by means of the method according to any of the previous claims.

9. Method of use of a protective wrapper according to claim 8, comprising the steps of:
- providing an electrical or electronic device selected from the group consisting of a remote control, a tablet or a smartphone, a POS (point of sale) terminal, a keyboard, a touch screen device or the like;
- inserting the electrical/electronic device in the inner compartment through the access opening;
- closing or restricting said opening by means of a seal or a clip, for example disposable, a drawstring or an elastic band joined to an edge of said opening.

10. Method according to the previous claim, modified in that the step of closing or restricting is replaced by a step of (heat) welding the access opening to prevent exit of said device.

11. Protective assembly comprising:
- a bacteriostatic or antibacterial protective wrapper, comprising a knitted tubular wall made with at least one polyamide yarn and defining an inner compartment; wherein the colour, the average thickness of said yarn and/or the knit density are selected so as to allow an least partial transparency through said wall;
- at least one active substance to grant said wall a bacteriostatic or antibacterial function, or impregnating said wall;
- an electrical or electronic device inserted in the inner compartment and selected from the group consisting of a remote control, a tablet or a smartphone, a POS (point of sale) terminal, a keyboard, a touch screen device or the like;
wherein a (heat-)welding closes a first axial end of the tubular wall, and wherein a seal or a clip, a drawstring or an elastic band closes or restricts the opposite axial end of said wall.
